# EUROPÄISCHE PATENTSCHRIFT

(11) **EP 1 030 807 B1**
(45) Veröffentlichungstag und Bekanntmachung des Hinweises auf die Patenterteilung: **31.07.2002**
(21) Anmeldenummer: 98951092.0
(22) Anmeldetag: 03.11.1998
(51) Int. Cl.: B64C 1/10

(54) **DRUCKSPANT, INSBESONDERE FÜR FLUGZEUGE**
PRESSURE FRAME DESIGNED IN PARTICULAR FOR AN AIRCRAFT
CADRE DE PRESSION DESTINE NOTAMMENT A UN AVION

(30) Priorität: 10.11.1997 AT 190397
(43) Veröffentlichungstag der Anmeldung: 30.08.2000
(73) Patentinhaber: Fischer Advanced Composite Components AG, 4910 Ried im Innkreis (AT)
(72) Erfinder: STEPHAN, Walter, A-4973 St. Martin (AT); FILSEGGER, Hermann, A-4910 Ried im Innkreis (AT)
(74) Vertreter: Köhler-Pavlik, Johann, Dipl.-Ing.
(86) Internationale Anmeldenummer: AT9800271
(87) Internationale Veröffentlichungsnummer: WO9924316

(56) Entgegenhaltungen:
- EP-A- 0 387 400

## Beschreibung

Die Erfindung betrifft einen Druckspant, insbesondere für Flugzeuge, bestehend aus einer vorzugsweise einstückigen Kalotte aus Faserverbundwerkstoffen und Einrichtungen zur Versteifung der Kalotte, welche mit der Kalotte verbunden oder zusammen mit der Kalotte einstückig hergestellt sind.

Für höhere Wirtschaftlichkeit wird die Reiseflughöhe von Verkehrsflugzeugen möglichst hoch gewählt. In größeren Höhen ist nämlich der Luftwiderstand und somit der Treibstoffverbrauch geringer. Übliche Reiseflughöhen liegen im Bereich von 10000 bis 12000 Metern. Solche Höhen sind aber aufgrund des dort herrschenden niedrigen Luftdrucks und niedrigen Sauerstoffgehalts sowie der niedrigen Lufttemperaturen für den Menschen nicht geeignet. Daher müssen die im Flugzeugrumpf herrschenden Verhältnisse an die gewohnten Lebensbedingungen des Menschen angepaßt werden. Dies geschieht dadurch, daß die Flugzeugkabine auf eine Atmosphäre entsprechend einer Höhe von etwa 3000 Metern gebracht wird. Aufgrund des Druckunterschieds zwischen dem Innenraum des Flugzeugs und dem Außenraum des Flugzeugs entsprechend einer Höhendifferenz von etwa 7000 bis 9000 Metern muß der Flugzeuginnenraum als Druckkessel ausgebildet werden, der diesen Druckdifferenzen standhält. Zu diesem Zweck befinden sich am vorderen und hinteren Ende des Flugzeugrumpf sogenannte Druckspante, welche so ausgeführt sind, daß sie diesen Belastungen standhalten.

Der hintere Druckspant ist üblicherweise in Form einer Kalotte ausgebildet, wobei die konkave Seite in Richtung Flugzeugkabine angeordnet ist. Bekannte Druckspante bestehen aus einer Vielzahl von Versteifungsprofilen, welche in radialer Richtung sowie in Richtung konzentrisch angeordneter Kreise verteilt sind und miteinander beispielsweise mittels Nieten verbunden sind. Über das derart gebildete Gerüst werden Metallteile überlappend aufgelegt und miteinander sowie mit den Versteifungselementen verbunden. Dementsprechend aufwendig und teuer ist die Herstellung solcher Druckspante. Im Falle der Bildung eines Risses in der Metallhaut besteht die Gefahr, daß sich dieser Riß fortsetzt sodaß der Druckspant birst und der Druck aus dem Passagierraum ins Heck entweicht, was zum Absturz des Flugzeuges rühren kann. Für größtmögliche Sicherheit muß daher sichergestellt sein, daß im Fallle des Auftretens eines Risses die Fortsetzung des Risses unterbunden wird, sodaß es zu keinem explosionsartigen oder schlagartigen Druckabfall kommen kann. Dies wird dadurch erreicht, daß die von Verstärkungsprofilen frei bleibenden Blechfelder möglichst klein gewählt werden und zusätzlich z.B. Titanblech-Rißstopper eingebaut werden müssen, was wiederum in einer noch aufwendigeren Herstellung resultiert. In Flugzeugen für mehrere Hundert Passagiere weist der hintere Druckspant einen Durchmesser von 3,5 bis 4 m auf. Bei diesen Dimensionen resultiert ein relativ hohes Gewicht von etwa 100 kg, welches sich aufgrund der großen Entfernung vom Schwerpunkt des Flugzeugs besonders negativ auswirkt.

Aus der EP 387 400 B1 ist ein Druckspant aus Faserverbundwerkstoffen für den Druckrumpf eines Flugzeugs bekannt, der möglichst leicht ist, billig herzustellen und einfach einzubauen. Zu diesem Zweck besteht der Druckspant aus einem ungleichförmigen Faserlagenaufbau, welcher im Randbereich steifer als im mittleren Bereich ausgebildet ist. Der Randbereich der Kalotte ist so ausgebildet, daß er sich dem Rumpfquerschnitt anpaßt und leicht einbaubar ist, beispielsweise durch Einkleben oder Einnieten. Dadurch wird ein zusätzlicher Spant zum Einbau des Druckspants in den Flugzeugrumpf eingespart. Wie aus den Daten der beschriebenen Ausführungsformen zu entnehmen, handelt es sich um einen Druckspant für relativ kleine Flugzeuge. Bei größeren Flugzeugen für einige 100 Passagiere wirken teilweise sehr große aerodynamische Kräfte seitlich auf den Druckspant, die z.B. durch Seitenleitwerkskräfte oder Schubkräfte der Triebwerke herrühren. Bei großen Flugzeugen weist der Druckspant einen Durchmesser von bis zu 3,5 bis 4 m auf. Bei derartigen Dimensionen ist auch eine höhere Gefahr eines Durchstülpens der Kalotte in Richtung Flugzeugkabine, also in Richtung der konkaven Seite der Kalotte bei Umschlag der Druckdifferenz zwischen Flugzeugkabine und Umgebung gegeben. Ein solcher Druckumschlag kann beispielsweise bei schnellem Sinken des Flugzeuges auftreten.

Aufgabe der Erfindung ist daher die Schaffung eines Druckspants, insbesondere für Flugzeuge, welcher möglichst geringes Gewicht aufweist, möglichst rasch und kostengünstig herstellbar ist und dabei trotzdem den Belastungsanforderungen, insbesondere bei großen Flugzeugen, genügt. Es soll auch die Gefahr der Zerstörung des Druckspants durch ein Umstülpen der Kalotte in Richtung Flugzeuginnenraum reduziert werden. Die Nachteile bekannter Druckspante sollen dabei vermieden oder zumindest reduziert werden.

Gelöst wird die Aufgabe dadurch, daß die Kalotte im wesentlichen gleichmäßige Dicke aufweist, und daß zumindest eine Einrichtung zur Versteifung der Kalotte im Mittenbereich der konkaven Seite der Kalotte auf diese aufgesetzt ist. Gerade bei großen Flugzeugen ist es notwendig und sinnvoll, die Kalotte des Druckspants vom Strukturspant, der z.B. Seitenleitwerks- oder Triebwerksschubkräfte aufzunehmen hat, über einen "biegeweichen" Randanschluß zu entkoppeln, sodaß sich etwaige Seitenkräfte nicht ungünstig auf die Kalotte auswirken. Daher wird die Kalotte zweckmäßigerweise über ein stabiles Profil am Flugzeugrumpf befestigt, weshalb die Kalotte randseitig nicht steifer oder stärker ausgebildet werden muß. Dadurch resultiert wiederum eine Materialeinsparung und somit eine Gewichtsreduktion der Anordnung. Der Ausdruck "im wesentlichen gleiche Dicke" soll dabei etwaige Randverdickungen bei Öffnungen und Durchbrüchen in der Kalotte, welche zur Verstärkung dieser Schwachpunkte in der Kalotte dienen, mit einschließen. Durch die im Mittenbereich der Kalotte vorgesehene Einrichtung zur Versteifung der Kalotte, welche an der konkaven Seite der Kalotte auf diese aufgesetzt und mit dieser verbunden oder einstückig hergestellt ist, wird eine wesentliche Stabilitätserhöhung erzielt, da im Falle eines Druckumschlags die Beulfelder wesentlich verringert werden und somit ein komplettes Durchstülpen der Kalotte nach Innen und somit eine Zerstörung der Kalotte verhindert wird. Durch entsprechende Konstruktion dieser Einrichtung zur Versteifung der Kalotte im Mittenbereich der Kalotte kann die Materialstärke der Kalotte weiter gesenkt werden, ohne daß der Druckspant den Sicherheitsanforderungen nicht mehr genügt.

Gemäß einem weiteren bevorzugten Merkmal ist vorgesehen, daß die Einrichtung zur Versteifung der Kalotte im Mittenbereich durch eine entgegen der Krümmung der Kalotte orientierte Versteifungsstruktur, beispielsweise eine kegelstumpfförmige, becherförmige oder parabelförmige Struktur gebildet ist, wobei zwischen Kalotte und Versteifungsstruktur ein Hohlraum angeordnet ist. Dadurch wird optimale Steifigkeit insbesondere im zentralen Bereich der Kalotte erzielt und somit die Wahrscheinlichkeit eines nach Innen Stülpens der Kalotte verringert.

Die Begutachtung der Kalotte eines Druckspants gehört zu den regelmäßig durchzuführenden Inspektionsaufgaben bei Flugzeugen. Daher ist gemäß einem weiteren Erfindungsmerkmal vorgesehen, daß in der Versteifungsstruktur im Mittenbereich der Kalotte Inspektionsöffnungen zur Inspektion des hinter der Versteifungsstruktur liegenden Teils der Kalotte angeordnet sind. Durch die Öffnungen wird auch Material und somit Gewicht eingespart. Allerdings ist darauf zu achten, daß durch die Öffnungen die Stabilität der Struktur nicht wesentlich beeinträchtigt wird.

Weiters ist vorgesehen, daß an der konkaven Seite der Kalotte Versteifungsprofile, insbesondere in radialer Richtung aufgesetzt sind, welche mit der Kalotte verbunden oder zusammen mit der Kalotte einstückig hergestellt sind.

Der Druckspant ist abgesehen von allfälligen Verbindungselementen zwischen Kalotte und Versteifungseinrichtungen oder Flugzeugrumpf ausschließlich aus faserverstärktem Kunststoff aufgebaut. Als Fasermaterialien dienen Glas, Kohlenstoff oder Aramid (aromatische Polyamide). Als Kunststoff wird vorzugsweise Duroplast oder Thermoplast verwendet. Gewebe ist gegenüber Metall sehr reißfest und rißtolerant und kann daher dünner und somit leichter aufgebaut werden.

Anhand der beiliegenden Abbildungen werden weitere Merkmale der Erfindung näher erläutert.

Darin zeigen
- Fig. 1: schematisch einen Flugzeugrumpf im Längsschnitt,
- Fig. 2: eine Ausführungsform des Druckspants in der Ansicht vom Flugzeuginnenraum gegen die Flugrichtung,
- Fig. 3: eine Schnittdarstellung des Druckspants gemäß Fig. 2 entlang der Schnittlinie III-III,
- Fig. 4: eine detaillierte Schnittdarstellung entlang der Schnittlinie IV - IV aus Fig. 2,
- Fig. 5: das Detail A aus Fig. 3 in vergrößerter Darstellung,
- Fig. 6: das Detail B aus Fig. 3 in vergrößerter Darstellung, und
- Fig. 7: eine andere Ausführungsvariante eines Druckspants in der Ansicht vom Flugzeuginnenraum entgegen der Flugrichtung.

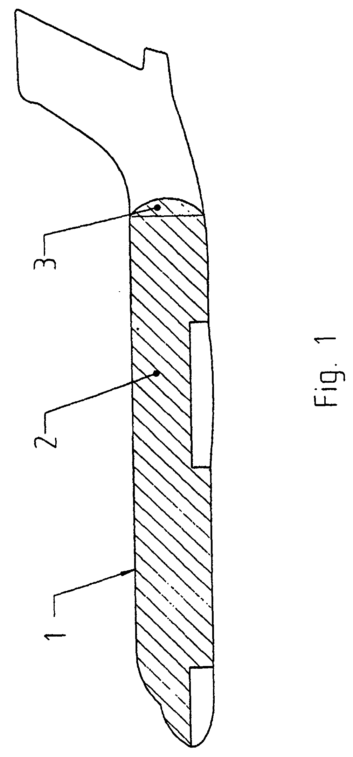

In Fig. 1 ist ein Flugzeugrumpf 1 schematisch in Längsrichtung des Flugzeuges dargestellt. Der als Druckkessel ausgebildete Flugzeuginnenraum 2 ist schraffiert eingezeichnet. Am hinteren Ende des Flugzeuginnenraums 2 ist der Druckspant 3 angeordnet. Dieser hat kalottenförmige Gestalt, wobei die konkave Seite in Richtung Flugzeuginnenraum 2 orientiert ist und üblicherweise mit Versteifungen (nicht dargestellt) versehen ist, welche ein Durch stülpen der Kalotte in Richtung Flugzeuginnenraum 2 verhindern. Der Druckspant 3 ist mit dem Flugzeugrumpf 1 sicher und dicht verbunden. Die Gestalt der Kalotte ist an den Querschnitt des Flugzeugrumpfs 2 angepaßt und kann dementsprechend rund, elliptisch, od. anders ausgestaltet sein. Die Art der Krümmung der Kalotte des Druckspants 3 kann je nach Anwendungsfall kreisförmig, parabelförmig, hyperbelförmig od. anders gestaltet sein.

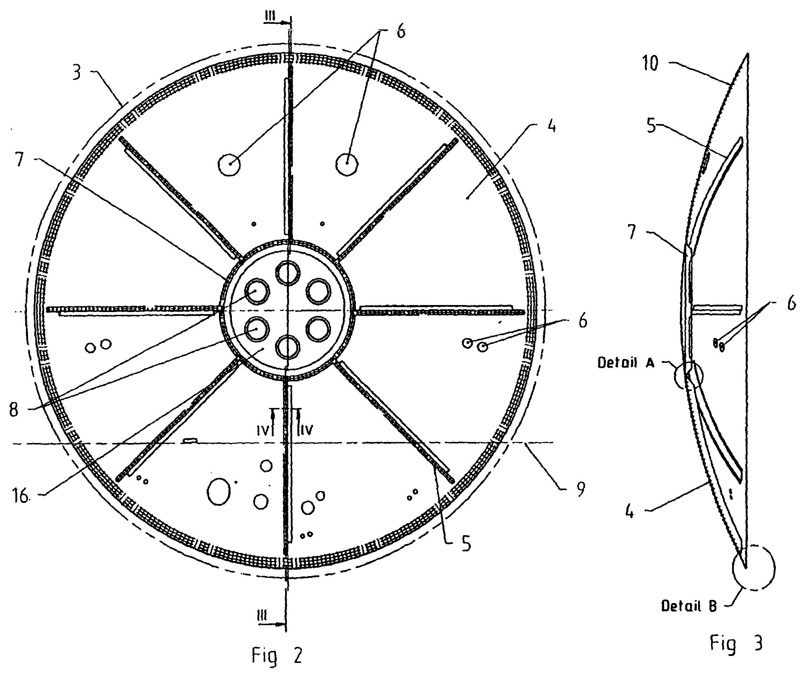

Fig. 2 zeigt eine Ausführungsform eines erfindungsgemäßen Druckspants 3 in der Ansicht vom Flugzeuginnenraum entgegen der Flugrichtung. Der Druckspant 3 besteht aus einer einstückigen Kalotte 4. Ist es beispielsweise herstellungsmäßig notwendig, kann die Kalotte 4 auch aus mehreren Einzelteilen hergestellt werden. Zur Verstärkung der Kalotte 4 ist an der konkaven Seite der Kalotte 4 um das Zentrum konzentrisch eine Versteifungsstruktur 7 angeordnet und mit der Kalotte 4 verbunden oder zusammen mit der Kalotte 4 einstückig hergestellt. Die Versteifungsstruktur weist im dargestellten Beispiel kegelstumpfförmige Gestalt auf, es können auch andere Konstruktionen, welche entgegen der Krümmung der Kalotte 4 orientiert sind, angeordnet sein, wie z.B. eine parabelförmige oder becherförmige Struktur. Der Boden 16 der kegelstumpfförmigen Versteifungsstruktur 7 weist Inspektionsöffnungen 8 auf, welche zur Inspektion des dahinter angeordneten Teils der Kalotte 4 dienen. Dies ist notwendig, da die Kalotte regelmäßig überprüft werden muß. Darüber hinaus wird durch die Inspektionsöffnungen 8 das Gewicht reduziert, ohne daß die Stabilität der Anordnung wesentlich verringert wird. Insbesondere für große Flugzeuge, bei denen der Kalottendurchmesser bis zu 3,5-4 m beträgt, sind zur weiteren Verstärkung der Kalotte 4 an der konkaven Seite radial Versteifungsprofile 5 angeordnet und mit der Kalotte 4 verbunden oder mit dieser einstückig hergestellt. Die Versteifungsstruktur 7 sowie die Versteifungsprofile 5 sind ebenfalls, wie die Kalotte 4, aus faserverstärktem Kunststoff aufgebaut Die Kalotte 4 weist verschiedene Öffnungen 6 zur Durchführung von elektrischen Leitungen, Hydraulik- oder Kraftstoffleitungen sowie zur Anordnung von Druckausgleichsventilen auf. Zur Verstärkung kann die Kalotte 4 im Bereich solcher Öffnungen 6 eine höhere Dicke aufweisen, sodaß eine von einer Öffnung 6 ausgehende Rißbildung weitgehend verhindert werden kann. Ansonsten weist die Kalotte 4 im wesentlichen gleichmäßige Dicke auf, was herstellungsmäßig vorteilhaft ist. Die Größe und Gestalt der zentralen Versteifungsstruktur 7 wird je nach Anforderung beliebig gewählt, wobei auf die Öffnungen 6 in der Kalotte 4 geachtet werden muß. Anstelle einer runden Gestalt kann die Versteifungsstruktur 7 auch in Form eines Vielecks ausgeführt werden. In der Abbildung ist das Bodenniveau 9 des Flugzeugkabine strichliert eingezeichnet.

Die Schnittdarstellung entlang der Schnittlinie III-III aus Fig. 2 ist in Fig. 3 dargestellt. Die radialen Striche an der Kalotte 4 deuten die Verbindungen 10 der Versteifungsprofile 5 mit der Kalotte 4 an. Die Versteifungsstruktur 7 und die Versteifungsprofile 5 verhindern ein Durchdrücken der Kalotte 4 in Richtung Flugzeuginnenraum. Wie aus dieser Abbildung besser ersichtlich, weist die zentrale Versteifüngsstruktur 7 kegelstumpfförmige Gestalt auf. Es können auch andere Konstruktionen vorgesehen werden, wie beispielsweise auch eine kalottenförmige Struktur, deren Krümmung entgegen der Krümmung der Kalotte 4 orientiert ist, und die mit der Kalotte 4 verbunden ist. Die Versteifungsprofile 5 sind vorzugsweise radial an der Kalotte 4 angeordnet, es ist aber durchaus möglich, daß die Versteifungsprofile 5 schräg zur radialen Richtung sowie zusätzlich tangential angeordnet sind.

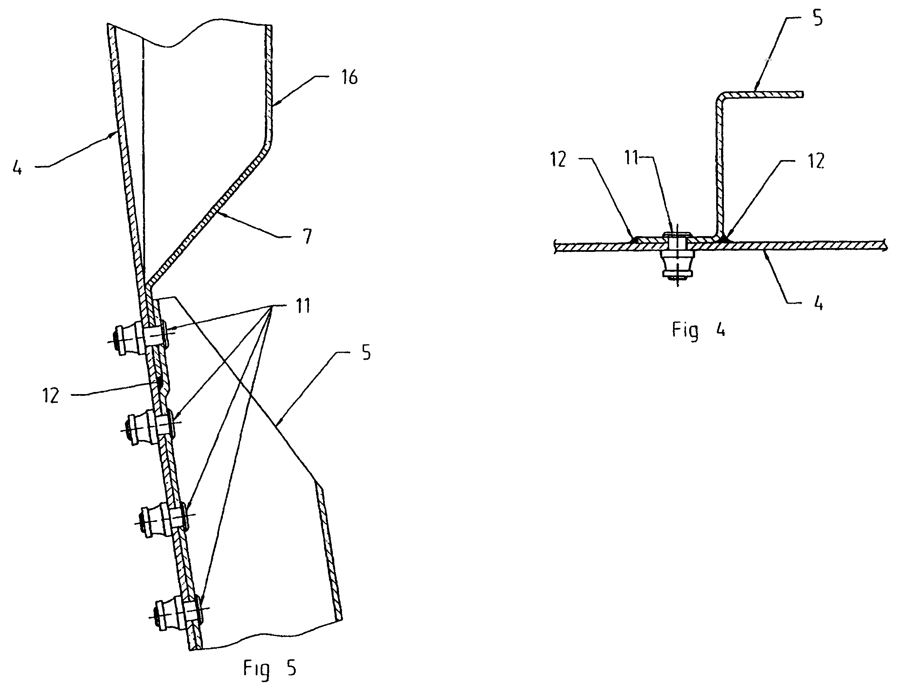

In der aus Fig. 4 ersichtlichen detaillierten Schnittbilddarstellung entlang der Schnittlinie IV-IV gemäß Fig. 2 ist ein Versteifungsprofil 5 und dessen Verbindung mit der Kalotte 4 dargestellt. In diesem Ausführungsbesipiel weist das radial angeordnete Versteifungsprofil 5 Z-förmigen Querschnitt auf, wobei ein Schenkel des Versteifungsprofiles 5 über eine Schraubenniete 11 mit der Kalotte 4 verbunden ist. Die Schraubenniete 11 kann beispielsweise aus Titan bestehen. Die Schraubenverbindung wird vorteilhafterweise abgedichtet, zu welchem Zweck diese "naß gesetzt", d.h. mit Dichtungsmasse versehen und danach eingeschraubt wird. Zur Abdichtung ist weiters zwischen dem Versteifungsprofil 5 und der Kalotte 4 an der Verbindungsstelle eine Dichtung 12 vorgesehen. Diese Dichtung 12 kann durch eine im Flugzeugbau üblicherweise verwendete Dichtungsmasse auf Polysulfidbasis, welche in pastöser Form vorliegt und dauerelastisches Verhalten aufweist, gebildet werden. Die Verbindung zwischen Kalotte 4 und Versteifimgsprofil 5 kann aber auch auf andere Methoden, beispielsweise durch Kleben erfolgen.

Aus dem in Fig. 5 dargestellten Detail A aus Fig. 3 ist die Verbindung der Versteifungsstruktur 7 mit der Kalotte 4 ersichtlich. Zu diesem Zweck ist der Rand der kegelstumpfförmigen Versteifüngsstruktur 7 mit Hilfe einer Schraubenniete 11 mit der Kalotte 4 verbunden. Zusätzlich überlappt ein Teil eines radialen Versteifimgsprofiles 5 den Bereich des Randes der Versteifüngsstruktur 7 und ist ebenfalls durch die Schraubenniete 11 mit der Kalotte 4 mitverbunden. Weitere Schraubennieten 11 dienen zur Verbindung des radial angeordneten Versteifungsprofiles 5 mit der Kalotte 4. Etwaige Zwischenräume werden mit einer Dichtung 12 versehen, die üblicherweise in Form einer Dichtungsmasse vorliegt.

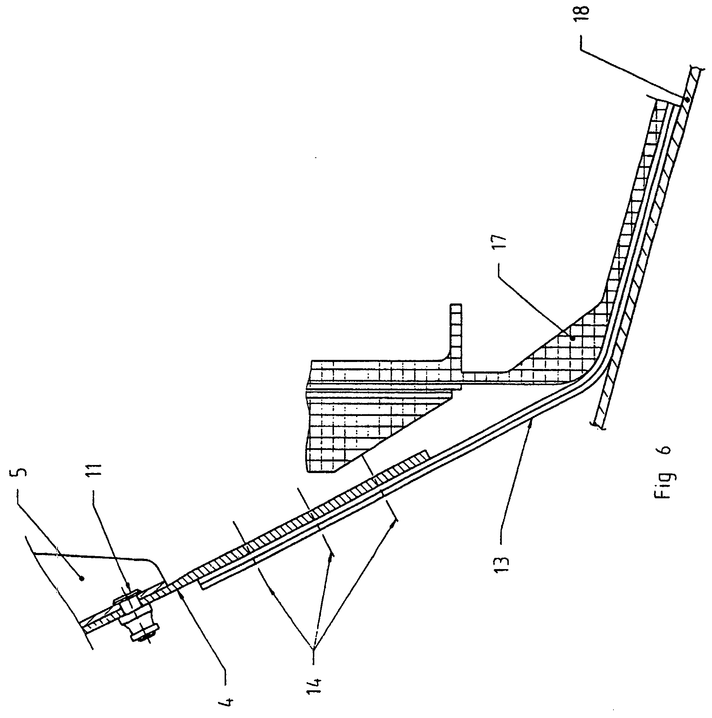

Das Detail B aus Fig. 3 ist in Fig. 6 vergrößert dargestellt. Darin ist die Verbindung zwischen dem Druckspant 3 und dem Flugzeugrumpf angedeutet. Diese Verbindung geschieht über einen Verbindungswinkel 13, der über Verbindungselemente 14 mit dem äußeren Rand der Kalotte 4 sicher und dicht verbunden wird. Der Verbindungswinkel 13 kann beispielsweise aus Titan hergestellt sein und stellt einen relativ biegeweichen Anschluß dar. Der mit der Flugzeugbeplankung 18 und dem Verbindungswinkel 13 verbundene Strukturspant 17 nimmt seitliche Kräfte auf, welche z.B. von den Seitenleitwerken oder den Schubkräften der Triebwerke herrühren, und verhindert somit eine daraus resultierende Belastung des Druckspants 3. Diese Entkoppplung der Kalotte 4 des Druckspants 3 vom Strukturspant 17 des Flugzeugrumpls ist gerade für große Flugzeuge besonders wichtig. Die Kalotte 4 muß ausschließlich den Flugzeuginnenraum abdichten, und nicht die seitlichen, externen Kräfte aufnehmen. Diese werden durch den Strukturspant 17 selbst übernommen. Zwischen dem Druckspant 3 und der Verbindung mit dem Flugzeugrumpf kann eine Isolierschicht, beispielsweise eine Schicht aus Glas und Epoxy angeordnet werden. Dadurch wird verhindert, daß es durch die elektrische Leitung zu einer elektrochemischen Korrosion der Verbindungselemente durch Elektrolyse kommt. Darüber hinaus sind an der Kalotte 4 meist Masseanschlüsse zur Erdung des Druckspants 3 vorgesehen.

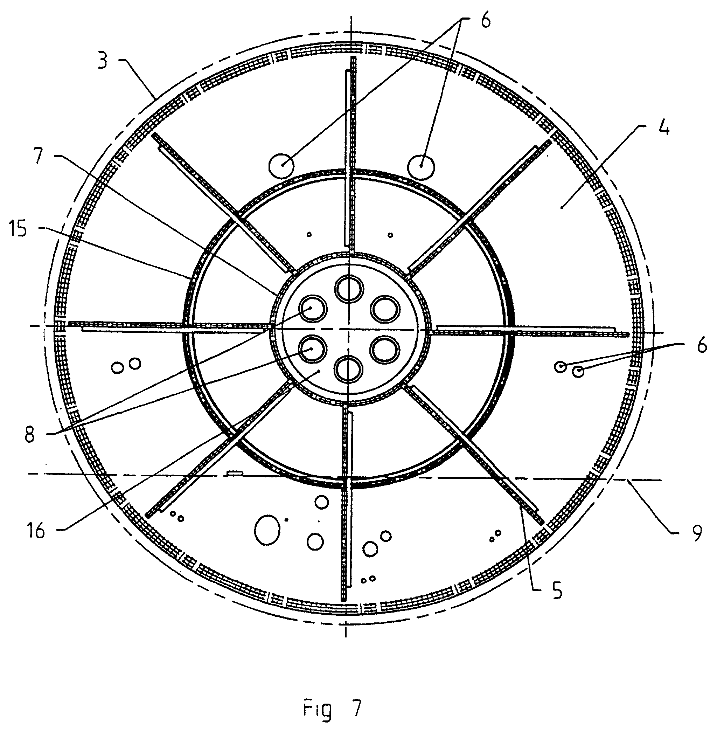

Aus Fig. 7 ist eine Ausführungsvariante eines erfindungsgemäßen Druckspantes dargestellt, bei dem zusätzlich zu der Versteifüngsstruktur 7 im mittleren Bereich der Kalotte sowie den radialen Versteifüngsprofilen 5 weitere Versteifüngsprofile 15 entlang eines konzentrischen Kreises angeordnet sind. Durch die Erhöhung der Anzahl der Versteifungsprofile werden die dahinterliegenden Felder der Kalotte 4 verkleinert und somit eine erhöhte Stabilität der Struktur erreicht. Allenfalls kann durch die aufwendigeren Versteifungsstrukturen 5, 7, 15 die Dicke der Kalotte 4 weiter reduziert und dadurch Material und Gewicht eingespart werden. Natürlich sind anstelle der kreisförmigen Versteifungsprofile 15 auch gerade Versteifungsprofile, welche ein Vieleck bilden, möglich.

Vorteilhafterweise wird der erfindungsgemäße Druckspant 3 so hergestellt, daß die Kalotte 4 zusammen mit der Versteifungsstruktur 7, und den Versteifungsprofilen 5, 15 in einem Arbeitsschritt einstückig gefertigt wird. Die sogenannte Resin Transfer Molding (RTM) - Technologie bringt gegenüber der herkömmlichen Herstellungsmethode unter Verwendung eines Autoklaven, in dem das Prepregmaterial ausgehärtet wird, Vorteile. Entsprechend des RTM-Verfahrens werden die trockenen Fasern in eine, dem herzustellenden Gegenstand entsprechende Form eingebracht und danach ein spezielles Harz mit relativ niedriger Viskosität gegebenenfalls unter Wirkung eines Vakuums in die geschlossene Form eingepreßt. Die Form wird erwärmt, um die Viskosität des Harzes weiter herabzusetzen und einen ungestörten Fluß in die Form zu gewährleisten. Danach härtet das die Fasern tränkende Harz aus. Nach dem RTM-Verfahren sind kompliziertere Gegenstände leicht, rasch und relativ kostengünstig herstellbar. Im gegebenen Fall kann daher die Kalotte 4 des Druckspants 3 zusammen mit allen Versteifungsstrukturen 5, 7 und 15 in einem Arbeitsschritt hergestellt werden. Somit wird auch keine Arbeitszeit zur Verbindung der Kalotte 4 mit den Versteifungseinrichtungen 5, 7, 15 mehr benötigt und die Dichtheit des Druckspants 3 erhöht.

Selbstverständlich ist eine Anwendung des gegenständlichen Druckspants auf andere Luftfahrzeuge oder vergleichbare Einrichtungen, bei denen eine Druckdifferenz zwischen Innenraum und Umgebung sicher aufrechterhalten werden muß, möglich.

## Patentansprüche

1. Druckspant (3), insbesondere für Flugzeuge, bestehend aus einer vorzugsweise einstückigen Kalotte (4) aus Faserverbundwerkstoffen und Einrichtungen (5, 7, 15) zur Versteifung der Kalotte (4), welche mit der Kalotte (4) verbunden oder zusammen mit der Kalotte (4) einstückig hergestellt sind, **dadurch gekennzeichnet, daß** die Kalotte (4) im wesentlichen gleichmäßige Dicke aufweist, und daß zumindest eine Einrichtung zur Versteifung der Kalotte (4) im Mittenbereich der konkaven Seite der Kalotte (4) auf diese aufgesetzt ist.

2. Druckspant nach Anspruch 1, **dadurch gekennzeichnet, daß** die Einrichtung zur Versteifung der Kalotte (4) im Mittenbereich d'urch eine entgegen der Krümmung der Kalotte (4) orientierte Versteifungsstruktur (7), beispielsweise eine kegelstumpfförmige, becherförmige oder parabelförmige Struktur gebildet ist, wobei zwischen Kalotte (4) und Versteifungsstruktur (7) ein Hohlraum angeordnet ist.

3. Druckspant nach Anspruch 2, **dadurch gekennzeichnet, daß** in der Versteifungsstruktur (7) im Mittenbereich der Kalotte (4) Inspektionsöffnungen (8) zur Inspektion des hinter der Versteifungsstruktur (7) liegenden Teils der Kalotte (4) angeordnet sind.

4. Druckspant nach einem der Ansprüche 1 bis 3, **dadurch gekennzeichnet, daß** an der konkaven Seite der Kalotte (4) Versteifungsprofile (5, 15), insbesondere in radialer Richtung aufgesetzt sind, welche mit der Kalotte (4) verbunden oder zusammen mit der Kalotte (4) einstückig hergestellt sind.

## Claims

1. A pressure frame (3), in particular for aircrafts, consisting of a preferably single-piece dome-shaped cover (4) of composite materials reinforced with fibres, and devices (5, 7, 15) for reinforcing the cover (4) connected to the cover (4) or produced in a single piece with the cover (4), **characterised in that** the cover (4) is of substantially uniform thickness and that at least one device for reinforcing the cover (4) is mounted on the cover in the central area of the concave side of the cover (4).

2. A pressure frame according to claim 1, **characterised in that** the device for reinforcing the cover (4) in the central area is formed by a reinforcing structure (7) oriented against the curvature of the cover (4) , e.g. a truncated cone-shaped, cup-shaped or parabolic structure, with a cavity being arranged between the cover (4) and the reinforcing structure (7).

3. A pressure frame according to claim 2, **characterised in that** inspection openings (8) are provided in the reinforcing structure (7) in the central area of the cover (4) for the inspection of the part of the cover (4) lying behind the reinforcing structure (7).

4. A pressure frame according to any one of claims 1 to 3, **characterised in that** reinforcing profiles (5, 15) are mounted on the concave side of the cover (4), particularly in radial direction, which profiles are connected to the cover (4) or are produced in a single piece with the cover (4).

## Revendications

1. Cadre de pression (3), notamment pour des avions, constitué d'une calotte (4) de préférence en une pièce en des miatériaux composites de fibres et d'installations (5, 7, 15) pour le renforcement de la calotte (4) qui sont reliées à la calotte (4) ou qui sont réalisées en une pièce ensemble avec la calotte (4), **caractérisé en ce que** la calotte (4) présente sensiblement une épaisseur uniforme et **en ce qu'**au moins une installation pour le renforcement de la calotte (4) est placée dans la zone médiane du côté concave de la calotte (4) sur celle-ci.

2. Cadre de pression selon la revendication 1, **caractérisé en ce que** l'installation pour le renforcement de la calotte (4) est formée dans la zone médiane par une structure de renforcement (7) orientée contre la courbure de la calotte (4), par exemple une structure tronconique, en forme de coupe ou en forme de parabole, où est diposé entre la calotte (4) et la structure de renforcement (7) un espace creux.

3. Cadre de pression selon la revendication 2, **caractérisé en ce que** sont disposées dans la structure de renforcement (7) dans la zone médiane de la calotte (4) des ouvertures d'inspection (8) pour inspecter la partie de la calotte (4) située derrière la structure de renforcement (7).

4. Cadre de pression selon l'une des revendications 1 à 3, **caractérisé en ce que** sont placés sur le côté concave de la calotte (4) des profilés de renforcement (5, 15), notamment dans la direction radiale qui sont reliés à la calotte (4) ou qui sont fabriqués en une pièce ensemble avec la calotte (4).
